# EUROPEAN PATENT SPECIFICATION

(11) **EP 2 899 042 B1**
(45) Date of publication and mention of the grant of the patent: **23.05.2018**
(21) Application number: 15152278.6
(22) Date of filing: 23.01.2015
(51) Int. Cl.: B60C 15/00, B60C 9/20, B60C 15/06, B60C 9/09

(54) **Motorcycle tire**
Motorradreifen
Pneu de motocyclette

(30) Priority: 28.01.2014 JP 2014013506
(43) Date of publication of application: 29.07.2015
(73) Proprietor: SUMITOMO RUBBER INDUSTRIES, LTD., Kobe-shi, Hyogo 651-0072 (JP)
(72) Inventor: Matsunami, Toshiyuki, Kobe-shi, Hyogo 651-0072 (JP)
(74) Representative: TBK

(56) References cited:
- EP-A1- 0 628 435
- EP-A1- 2 196 328
- EP-A1- 2 543 522

## Description

### Field of the Invention

The present invention relates to a pneumatic tire to be mounted on a motorcycle.

### Background Art

As improvements in road systems advance, more motorcyclists have an opportunity to drive at high speeds. On highways, driving at high speeds tends to go on for hours on end. Motorcycles are equipped with radial tires, which are suitable for high-speed driving. In radial tires, the carcass is reinforced with a band. Such a band is provided with cords that extend in a circumferential direction.

A motorcycle tire disclosed in JP2013-35540A is a radial tire, and its turning stability is improved without sacrificing riding comfort. The carcass of the tire is formed with a first ply and a second ply. The first ply turns up around the bead core from the inner side to the outer side. The second ply is not wrapped around the bead core. The second ply covers the turn-up portion of the first ply. When the first ply and second ply are provided, proper rigidity of the tire is achieved. The tire exhibits excellent riding comfort and turning capability.

EP 2 543 522 A1, EP 2 196 328 A1 and EP 0 628 435 A1 relate to pneumatic tires according to the preamble of claim 1.

### PRIOR ART PUBLICATION

### PATENT PUBLICATION

Patent Publication 1: JP2013-35540A

### SUMMARY OF THE INVENTION

### PROBLEMS TO BE SOLVED BY THE INVENTION

When external force is exerted on the tire, its sidewall warps. When the tire warps, impact from the road surface is absorbed. The sidewall warps significantly in a portion where the carcass has maximum width in the axial direction. Significantly greater external force may cause the sidewall to buckle. In such a tire, the inner edge of the second ply of the carcass tends to be positioned near the portion of maximum width. When greater force is exerted on a tire where the inner edge is located near the portion of carcass with maximum width, buckling is more likely to occur at the sidewall originating at the inner edge. Buckling in a sidewall reduces impact absorbability and lowers riding comfort and turning stability.

The objective of the present invention is to provide a pneumatic motorcycle tire that exhibits excellent riding comfort and turning stability.

### SOLUTIONS TO THE PROBLEMS

The objective of the present invention is solved by the subject-matter of claim 1. Further advantageous developments are subject-matters of the dependent claims.

A pneumatic motorcycle tire according to one aspect of the present invention has the following: a tread; a pair of sidewalls each extending from an edge of the tread in an approximately radially inward direction; a pair of beads each further extending from the sidewall in an approximately radially inward direction; a carcass spread along the inner side of the tread and sidewalls to bridge both beads; and a band laminated on the carcass in an approximately radially inward direction from the tread.

The band is made of cords and topping rubber. The cords are helically wound in a tire circumferential direction. The absolute value of the cord angles to the equatorial plane is 5 degrees or less.

The carcass is made up of a first ply and a second ply which is laminated on the radially outer side of the first ply. The first ply is made of first carcass cords and topping rubber. The absolute value of the inclination angle of the first carcass cords with respect to a circumferential direction is at least 60 degrees but no greater than 90 degrees. The second ply is made of second carcass cords and topping rubber. The absolute value of the inclination angle of the second carcass cords with respect to a circumferential direction is at least 60 degrees but no greater than 90 degrees. The first ply turns up around the bead. The first ply has a turn-up portion that extends in an approximately radially outward direction and a turn-up edge positioned on the radially outer side of the turn-up portion. The second ply has an inner edge positioned on the radially inner side of a tread edge (PT). The turn-up edge is positioned on the axially inner side of the second ply.

Regarding the half width (LT) of the tread surface in an axial direction, point (PA) is set at one quarter of the half width (LT) measured from the tread edge. Distance (LH) is set as the distance from the tread edge to the bead heel. Point (PB) is set on the outer surface of the tire, corresponding to the midpoint of distance (LH). Point (P1) is set on the outer surface of the tire, corresponding to the turn-up edge. Point (P2) is set as a point on the outer surface of the tire, corresponding to the inner edge. When defined as above, point (P1) is located at the tread edge or between the tread edge and point (PA) in a radial direction, distance (L2) from the tread edge to point (P2) and distance (LH) are set to have a ratio (L2/LH) of 0.60 or greater but no greater than 0.90, and the tip of the apex is disposed between the tread edge and point (PA) in a radial direction.

Thickness (AW) of the apex and bead width (BW) at point (PB) above are preferred to have a ratio (AW/BW) of 0.3 or greater but no greater than 0.7. The hardness of crosslinked rubber of the apex is preferred to be at least 70 but no greater than 85.

### EFFECTS OF THE INVENTION

The rigidity of the tire is enhanced by the combination of carcass and apex. Sufficient cornering force is generated in the tire, and its turning stability is excellent. When greater force is exerted on the tire, a reduction in riding comfort and turning stability is prevented in the tire.

### BRIEF DESCRIPTION OF THE DRAWINGS

FIG. 1 is a cross-sectional view showing part of a motorcycle tire according to an embodiment of the present invention; and
FIG. 2 is an enlarged cross-sectional view showing part of the tire shown in FIG. 1.

### DETAILED DESCRIPTION OF THE EMBODIMENTS

Preferred embodiments of the present invention are described in detail by referring to the accompanying drawings when applicable.

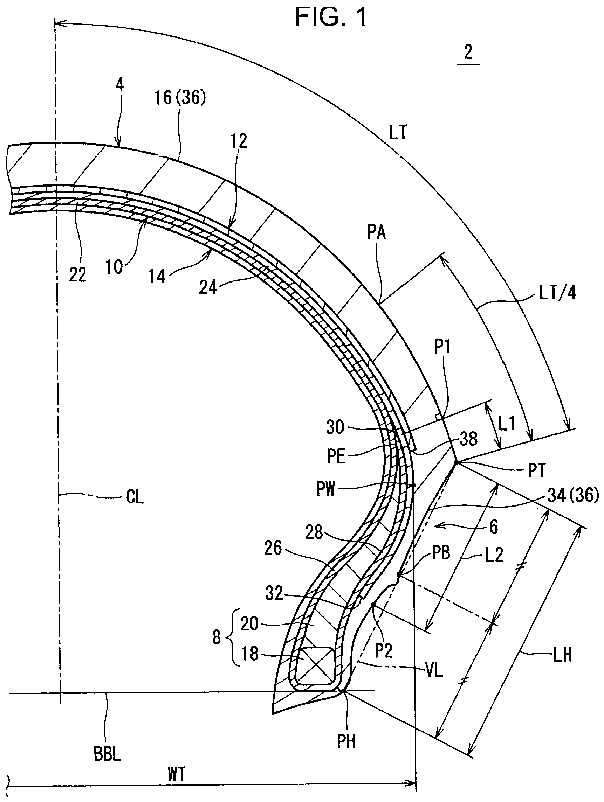

FIG. 1 is a cross-sectional view showing part of tire 2 to be equipped on a motorcycle according to an embodiment of the present invention. In FIG. 1, vertical directions correspond to radial directions of tire 2, lateral directions correspond to axial directions of tire 2, and directions perpendicular to the drawing sheet are circumferential directions of tire 2. Dotted line (CL) in FIG. 1 indicates the equatorial plane of tire 2. Tire 2 is shaped to be substantially laterally symmetrical to the equatorial plane. Tire 2 is provided with tread 4, sidewall 6, bead 8, carcass 10, band 12 and inner liner 14. Tire 2 is a pneumatic tubeless tire.

Tread 4 is made of crosslinked rubber, and is shaped convex in a radially outward direction. Tread 4 forms tread surface 16 which makes contact with the road surface. Although omitted from the drawings, grooves may be formed in tread surface 16 to provide tread patterns.

Sidewall 6 extends from the edge of tread 4 in an approximately radially inward direction. Sidewall 6 is made of crosslinked rubber. Sidewall 6 warps and absorbs impact from the road surface. Sidewall 6 prevents external damage to carcass 10.

Bead 8 extends from sidewall 6 in an approximately radially inward direction. Bead 8 is made up of core 18 and apex 20 which extends from core 18 in a radially outward direction. Core 18 is formed by wrapping non-stretchable wire into a ring shape. Typically, steel wire is used for making core 18. Apex 20 tapers in a radially outward direction. Apex 20 is made of highly hard crosslinked rubber.

In FIG. 1, solid line (BBL) indicates the bead base line. The bead base line (BBL) is a line to determine the diameter of the rim on which tire 2 is mounted (see JATMA). The bead base line (BBL) extends in an axial direction. Point (PH) is where the bead base line (BBL) intersects with the axially outer surface of bead 8. Point (PH) is the heel of bead 8.

Carcass 10 is bridged between beads 8 on both sides, and formed along the inner side of tread 4 and sidewall 6. Carcass 10 is formed with first ply 22 and second ply 24. First ply 22 is wrapped around bead 8 from the axially inner side toward the outer side. Second ply 24 is laminated on the radially outer side of first ply 22.

Although omitted from the drawings, first ply 22 is made of first carcass cords and topping rubber. First carcass cords incline to the equatorial plane. The absolute value of the inclination angle to the equatorial plane is at least 60 degrees but no greater than 90 degrees. Second ply 24 is made of second carcass cords and topping rubber. Second carcass cords incline to the equatorial plane. The absolute value of the inclination angle to the equatorial plane is at least 60 degrees but no greater than 90 degrees. In other words, tire 2 is a radial tire. In tire 2, the inclination direction of the first carcass cords is opposite the inclination direction of the second cords with respect to the equatorial plane. The absolute value of the inclination angle of the first carcass cords is set to be equal to the absolute value of the inclination angle of the second carcass cords. The first and second carcass cords are usually made of organic fibers. Preferred examples of organic fibers are polyester fibers, nylon fibers, rayon fibers, polyethylene naphthalate fibers and aramid fibers.

Although omitted from the drawings, tire 2 may include a belt. A belt is disposed on the radially outer side of carcass 10. The belt is laminated on carcass 10, and reinforces carcass 10. The belt is formed with an inner layer and an outer layer, for example. The inner and outer layers are each made of multiple belt cords with a parallel orientation to each other and of topping rubber. Each cord inclines to the equatorial plane. The absolute value of the inclination angle is at least 10 degrees but no greater than 35 degrees. The inclination direction of the inner-layer belt cords is opposite the inclination direction of the outer-layer belt cords. The preferred material for belt cords is organic fibers. However, steel may be used for belt cords.

Band 12 is laminated on the radially outer side of carcass 10. If the above-mentioned belt is provided, band 12 is laminated on the radially outer side of the belt. Band 12 is made of cords and topping rubber. The cords extend substantially in a circumferential direction, and are helically wound. Band 12 has a so-called jointless structure. The cords bind tire 2 in a radial direction. If a belt is included in the tire, lifting of the belt is suppressed. Cords are usually made of organic fibers. Preferred examples of organic fibers are nylon fibers, polyester fibers, rayon fibers, polyethylene naphthalate fibers and aramid fibers.

Inner liner 14 is bonded to the inner surface of carcass 10. Inner liner 14 is made of crosslinked rubber. Rubber with excellent air permeability is used for inner liner 14. Inner liner 14 works to retain the inflation pressure of tire 2.

As shown in FIG. 1, first ply 22 is wound around bead 8 from the axially inner side toward the outer side. First ply 22 turns up around core 18 from the axially inner side toward the outer side. Because of such a turn-up structure, first ply 22 has main portion 26 and turn-up portion 28. Turn-up portion 28 has turn-up edge 30 positioned on its radially outer edge.

Second ply 24 does not wrap around bead 8. Second ply 24 does not have a turn-up portion. Second ply 24 has inner edge 32. Second ply 24 extends in an axial direction from inner edge 32 of one side toward inner edge 32 on the other side. Inner edge 32 is in the radially innermost location among the portions of second ply 24. Turn-up edge 30 of first ply 22 is positioned on the radially outer side of inner edge 32. Second ply 24 covers turn-up edge 30.

Two-way arrow (LT) in FIG. 1 indicates the half width of tread surface 16 in an axial direction. Point (PT) is a tread edge. Half width (LT) is measured from the equatorial plane to tread edge (PT). Half width (LT) is measured along tread surface 16. Point (PA) is positioned on tread surface 16 and indicates a location that is one quarter of the half width (LT) from tread edge (PT). Point (PA) is obtained at a cross section of tire 2 as shown in FIG. 1.

Two-dot chain line (VL) is a straight line connecting tread edge (PT) and point (PH). Point (PB) is such a point on outer surface 34 of tire 2 that corresponds to the midpoint of straight line (VL). In tire 2, the midpoint of straight line (VL) is not on outer surface 34 of sidewall 6. If the midpoint of straight line (VL) is on outer surface 34 of sidewall 6, that midpoint is referred to as point (PB). In tire 2, point (PB) is defined as where outer surface 34 of sidewall 6 intersects with a straight line that indicates the minimum distance between the midpoint of straight line (VL) and outer surface 34. Point (PB) is obtained in a cross section of tire 2 as shown in FIG. 1.

Point (P1) indicates such a point on outer surface 36 of tire 2 that corresponds to turn-up edge 30. Tread surface 16 combined with outer surface 34 of sidewall 6 makes up outer surface 36 of tire 2. Point (P1) is where outer surface 36 intersects with the straight line that indicates the minimum distance between turn-up edge 30 and outer surface 36. Point (P2) indicates such a point on outer surface 34 of tire 2 that corresponds to inner edge 32. Point (P2) is where outer surface 34 intersects with the straight line that indicates the minimum distance between inner edge 32 and outer surface 34. Turn-up portion 28 and second ply 24 overwrap in the range from point (P1) to point (P2). Points (P1) and (P2) are obtained in a cross section of tire 2 as shown in FIG. 1.

In tire 2, point (P1) is positioned on the radially inner side of point (PA), and on the radially outer side of tread edge (PT). Point (P1) is positioned on tread surface 16. Point (P2) is positioned on the radially inner side of point (PB). Point (P2) is positioned on outer surface 34 of sidewall 6. In tire 2, the range from point (P1) to point (P2) is where turn-up portion 28 overwraps second ply 24.

Two-way arrow (L1) in FIG. 1 indicates the length from tread edge (PT) to point (P1). Length (L1) is measured along tread surface 16. Two-way arrow (L2) indicates the length from tread edge (PT) to point (P2). Two-way arrow (LH) indicates the length from tread edge (PT) to heel (PH). Lengths (L2) and (LH) are measured along straight line (VL). Lengths (L1), (L2) and (LH) are obtained in a cross section of tire 2 as shown in FIG. 1.

Two-way arrow (WT) in FIG. 1 indicates the maximum width of carcass 10. Maximum width (WT) is the distance in an axial direction from outer edge (PW) on one side of carcass 10 to outer edge (PW) on the other side. Maximum width (WT) is measured as a straight line in an axial direction. In tire 2, maximum width (WT) is measured as a straight line from outer edge (PW) of one side of turn-up portion 28 to outer edge (PW) on the other side. Maximum width (WT) is measured when tire 2 is mounted on a normal rim and when air is filled in tire 2 at a normal inflation pressure.

In tire 2, turn-up edge 30 of first ply 22 is positioned on the axially inner side of second ply 24. Second ply 24 overwraps turn-up portion 28 of first ply 22. Second ply 24 covers turn-up edge 30. Carcass 10 is appropriately reinforced by the combination of first ply 22 and second ply 24. Accordingly, the rigidity of carcass 10 is appropriately enhanced. In tire 2, riding comfort is not lowered and distortion during the turn of the motorcycle is suppressed.

Moreover, the position of point (P1) is set at or on the outer side of tread edge (PT) in a radial direction. Rigidity in the entire radial direction of sidewall 6 is reinforced by first ply 22. Tire 2 exhibits excellent turning stability. From that point of view, half width (LT) and length (L1) are preferred to have a ratio (L1/LT) of 0.05 or greater, more preferably 0.07 or greater, and especially preferably 0.10 or greater.

Meanwhile, since point (P1) is positioned on the radially inner side of point (PA), tire 2 does not become excessively rigid. A reduction in impact absorbability is suppressed. In the vicinity of point (P1), rigidity on tread surface 16 is made different. Point (P1) of tire 2 is positioned on the radially inner side of point (PA). While the motorcycle is turning, the region of tread surface 16 that makes contact with the ground shifts from the central region to the shoulder region. During such a transient moment, the rider will not feel discomfort because of the difference in rigidity. Point (P1) of tire 2 is positioned on the radially outer side of tread edge (PT), and yet a reduction in transient characteristics is suppressed. From those viewpoints, the ratio (L1/LT) is preferred to be 0.20 or lower, more preferably 0.18 or lower, and especially preferably 0.15 or lower.

When external force is exerted on tire 2, sidewall 6 warps. Especially significant warping of sidewall 6 is observed in the vicinity of maximum width (WT) of carcass 10. In other words, sidewall 6 warps significantly in the portion near axially outer edge (PW) of carcass 10. Point (P2) of tire 2 is positioned on the radially inner side of tread edge (PT). In tire 2 where point (P2) is positioned near radially outer edge (PW), buckling may occur near point (P2) of sidewall 6. Impact absorbability and turning stability are reduced when buckling occurs in tire 2.

Point (P2) of tire 2 is positioned on the radially inner side of point (PB). Axially outer edge (PW) of tire 2 is positioned on the radially outer side of point (PB). Inner edge 32 of the second ply is positioned away from outer edge (PW) in a radial direction. Stress is suppressed from concentrating on inner edge 32 of second ply 24. Buckling is suppressed from occurring in sidewall 6 of tire 2. The impact absorbability and turning stability of tire 2 will not decrease.

Considering the above, distance (L2) from tread edge (PT) to point (P2) and distance (LH) are set to have a ratio (L2/LH) of 0.60 or greater. The ratio (L2/LH) is preferred to be 0.61 or greater, more preferably 0.62 or greater. On the other hand, tire 2 with a greater ratio (L2/LH) results in greater rigidity of sidewall 6. Impact absorbability decreases when sidewall 6 has greater rigidity. For that reason, the ratio (L2/LH) is set at 0.90 or lower.

Moreover, tip edge (PE) of apex 20 is positioned on the radially outer side of tread edge (PT) in tire 2. Tip edge (PE) is positioned sufficiently away from point (PW) in a radial direction. Accordingly, buckling is suppressed from occurring in sidewall 6. Even when greater external force is exerted on tire 2, an acute reduction in riding comfort is suppressed. The riding comfort of tire 2 is excellent. Tire 2 exhibits excellent turning stability.

Meanwhile, tip edge (PE) of apex 20 is positioned on the radially inner side of point (PA). Accordingly, tire 2 is suppressed from being excessively rigid. A decrease in riding comfort of tire 2 is suppressed.

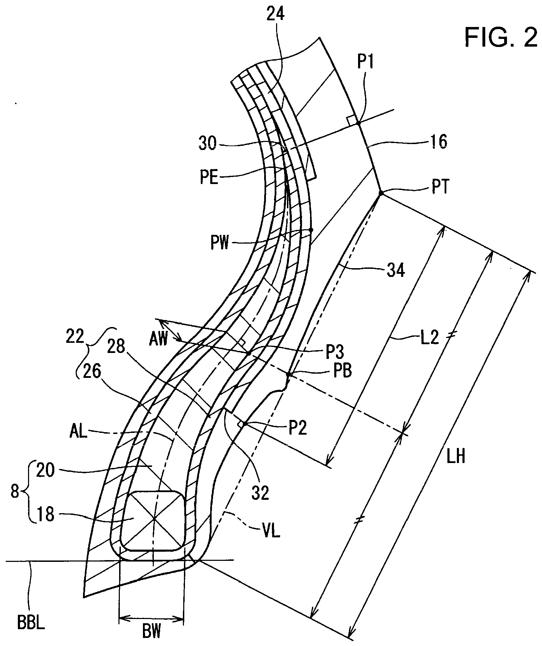

In FIG. 2, point (P3) is where the straight line passing through point (PB) and perpendicular to straight line (VL) intersects with the axially outer surface of apex 20. Dotted line (AL) indicates the center line of apex 20. Two-way arrow (AW) indicates the thickness of apex 20 at point (P3). Thickness (AW) is measured in a direction perpendicular to central line (AL). Two-way arrow (BW) indicates the width of bead 8. Width (BW) is the maximum width of bead 8. Usually, the width of bead 8 becomes maximum at core 18 or near core 18. Width (BW) is measured where width (BW) is maximum. Width (BW) is usually at least 4.0 mm but no greater than 7.5 mm.

When apex 20 has sufficient thickness (AW) relative to width (BW) of bead 8 and is combined with carcass 10, sufficient rigidity of tire 2 is achieved. Tire 2 exhibits excellent turning stability. From those viewpoints, thickness (AW) and width (BW) are set to have a ratio (AW/BW) of 0.30 or greater. The ratio (AW/BW) is more preferred to be 0.35 or greater and especially preferred to be 0.40 or greater.

On the other hand, tire 2 exhibits excellent impact absorbability when thickness (AW) relative to width (BW) is reduced. Tire 2 exhibits excellent riding comfort. From those viewpoints, the ratio (AW/BW) is set at 0.70 or lower. The ratio (AW/BW) is more preferred to be 0.65 or lower, and is especially preferred to be 0.60 or lower.

Moreover, by setting the hardness of the crosslinked rubber in apex 20 to be within a predetermined range, riding comfort and turning stability are both achieved in tire 2. When a crosslinked rubber with greater hardness is used for apex 20, excellent rigidity is obtained in tire 2. Sufficient rigidity contributes to enhancing turning stability. From that viewpoint, the hardness is preferred to be 70 or greater. The hardness is more preferred to be 73 or greater, and is especially preferred to be 75 or greater. On the other hand, the riding comfort of tire 2 is excellent when a crosslinked rubber with lower hardness is used for forming apex 20. From that viewpoint, the hardness is preferred to be 85 or lower. The hardness is more preferred to be 82 or lower, and is especially preferred to be 80 or lower.

Unless otherwise specified, the dimensions and angles of tire 2 are measured when tire 2 is set to a normal rim and air is filled in tire 2 to a normal inflation pressure. No load is exerted on tire 2 at the time of measuring. In the present application, a normal rim indicates a rim regulated by a regulatory system that includes standards for tire 2. Normal rims are "Normal Rim" in JATMA regulations, "Design Rim" in TRA regulations and "Measuring Rim" in ETRTO regulations. In the present application, a normal inflation pressure indicates the air pressure regulated by a regulatory system that includes standards for tire 2. For example, it is "Maximum Air Pressure" under JATMA regulations, maximum value described in "Tire Load Limits at Various Cold Inflation Pressures" under TRA regulations, and "Inflation Pressure" under ETRTO regulations.

The rubber hardness in the present application is based on "JIS-K 6253" and is measured when a type-A durometer is pressed against tire 2 under the conditions of 23°C.

### [EXAMPLES]

The effects of the present invention are made clear by the following examples. However, it should be understood that the present invention is not limited to the descriptions of those examples.

### [Example 1]

A pair of tires was prepared to have the basic structure shown in FIG. 1 and specifications in Table 1 below and mounted on the front and rear wheels of a motorcycle. The tire size for the front wheel was 120/70ZR17 and the tire size for the rear wheel was 190/50ZR17. The material for the band cords is aramid fibers. The angle of band cords to the equatorial plane is substantially 0 degrees. The material for the first carcass cords of the first ply and the material for the second carcass cords of the second ply are nylon fibers. The angles of the first carcass cords and second carcass cords with respect to the equatorial plane are substantially 90 degrees. With respect to the equatorial plane, the angle of the first carcass cords is the same as the angle of the second carcass cords. The fineness of the first and second carcass cords is 2/1400 dtex.

When letter "A" is denoted in the field for "turn-up edge position of first ply" in Tables 1∼4 below, it indicates that the turn-up edge of the first ply is positioned on the inner side of the second ply as shown in FIG. 1, whereas letter "B" indicates that the turn-up edge of the first ply is positioned on the outer side of the second ply.

When letter "X" is denoted in the field for "tip edge position of apex" in Tables 1∼4 below, it indicates that the tip edge of the apex is positioned between point (PA) and the tread edge in a radial direction as shown in FIG. 1, whereas letter "Y" indicates that the tip edge of the apex is positioned on the radially outer side of point (PA), and letter "Z" indicates that the tip edge of the apex is positioned on the radially inner side of the tread edge.

In the tire of Example 1, half width (LT) of the tread surface and length (L1) from tread edge (PT) to point (P1) that corresponds to the turn-up edge position were set to have a ratio (L1/LT) of 0.1. Length (LH) from tread edge (PT) to heel (PH) and length (L2) from tread edge (PT) to point (P2) that corresponds to the inner edge position of the second ply were set to have a ratio (L2/LH) of 0.62.

### [Comparative Example 1∼2]

Paired tires were each prepared the same as in Example 1 except that the tip edge position of the apex and the ratio (AW/BW) were set as shown respectively in Table 1 below.

### [Comparative Example 3]

As Comparative Example 3, a pair of commercially available tires was prepared. In those tires, the first and second plies were turned up around the core from the axially inner side toward the outer side. The turn-up edge of the first ply was positioned on the radially outer side of the turn-up edge of the second ply. The turn-up edge of the first ply was positioned on the radially inner side of tread edge (PT). The tip edge of the apex was positioned on the radially inner side of the tread edge. Since the carcass provided in those tires was different from that in Example 1, the symbol "-" is denoted in the fields for the ratio (L1/LT) and ratio (L2/LT).

### [Comparative Example 4]

Another pair of tires was prepared for Comparative Example 4. The specifications of those tires were the same as those in Comparative Example 3 except that the tip edge position of the apex was changed and the ratio (AW/BW) was set as shown in Table 1 below. The same as in Comparative Example 3, the symbol "-" is denoted in the fields for the ratio (L1/LT) and ratio (L2/LT).

### [Comparative Example 5]

The first ply was turned up around the core from the axially inner side to the outer side. The second ply is not turned up around the core. The inner edge of the second ply positioned on the radially innermost side was set on the axially inner side of the apex. The inner edge was laminated between the main portion of the first ply and the apex. The turn-up edge of the first ply was not covered by the second ply. Moreover, the tip edge position of the apex was set as shown in Table 1 below. The rest was set the same as in Example 1 to obtain a pair of tires.

### [Comparative Examples 6∼7]

Paired tires were each prepared the same as in Example 1 except that the turn-up edge position of the first ply was changed and the ratio (L1/LT) was set as shown respectively in Table 2. In Comparative Example 7, the turn-up edge of the first ply was positioned on the radially inner side of tread edge (PT). Thus, the symbol "-" is denoted in the field for the ratio (L1/LT).

### [Examples 2∼3 and Comparative Example 8]

Paired tires were each prepared as in Example 1 except that the inner edge position of the second ply was changed and the ratio (L2/LT) was set as shown respectively in Table 2.

### [Examples 4∼8]

Paired tires were each prepared the same as in Example 1 except that the ratio (AW/BW) was set as shown respectively in Table 3.

### [Examples 9∼12]

Paired tires were each prepared the same as in Example 1 except that the hardness of the rubber used for forming the apex was set as shown respectively in Table 4.

### [Evaluation of Tires Mounted on Motorcycle]

A pair of tires prepared in each of the examples and comparative examples was mounted on a commercially available motorcycle of a 1000 cm³ displacement (4-cycle engine). A front-wheel tire was set on a normal rim "MT3.5X17" and the air inflation pressure was set at 250 kPa. A rear-wheel tire was set on a normal rim "MT6.00X17" and the air inflation pressure was set at 290 kPa. A rider rode the motorcycle on a dry asphalt road. The rider conducted sensory evaluations with point 5.0 set to be the best. Evaluation categories were turning stability, impact absorbability and transient characteristics. The higher number indicates better evaluation. The results are shown in Tables 1∼4 below.

**Table 1: Evaluation Results**

| | comp. example | example 1 | comp. example | comp. example | comp. example | comp. example |
|---|---|---|---|---|---|---|
| presence of turn-up portion of 1st ply | yes | yes | yes | yes | yes | yes |
| turn-up edge position of 1st ply | A | A | A | - | - | B |
| presence of turn-up portion of 2nd ply | no | no | no | yes | yes | no |
| ratio: L1/LT | 0.1 | 0.1 | 0.1 | - | - | 0.1 |
| ratio: L2/LH | 0.62 | 0.62 | 0.62 | - | - | 0.62 |
| tip-end position of apex | Z | X | Y | Z | X | z |
| ratio: AW/BW | 0.2 | 0.5 | 0.5 | 0.2 | 0.5 | 0.5 |
| rubber hardness of apex | 77 | 77 | 77 | 77 | 77 | 77 |
| turning stability | 3.5 | 4.2 | 3.0 | 3.5 | 3.4 | 3.3 |
| impact absorbability | 3.5 | 4.5 | 2.9 | 3.0 | 2.9 | 3.1 |
| transient characteristics | 3.5 | 4.0 | 3.5 | 3.5 | 3.0 | 3.5 |

**Table 2: Evaluation Results**

| | comp. example 6 | comp. example 7 | comp. example 8 | example 2 | example 3 |
|---|---|---|---|---|---|
| presence of turn-up portion of 1st ply | yes | yes | yes | yes | yes |
| turn-up edge position of 1st ply | A | A | A | A | A |
| presence of turn-up portion of 2nd ply | no | no | no | no | no |
| ratio: L1/LT | 0.3 | - | 0.1 | 0.1 | 0.1 |
| ratio: L2/LH | 0.62 | 0.62 | 0.55 | 0.65 | 0.8 |
| tip-end position of apex | X | X | X | X | X |
| ratio: AW/BW | 0.5 | 0.5 | 0.5 | 0.5 | 0.5 |
| rubber hardness of apex | 77 | 77 | 77 | 77 | 77 |
| turning stability | 4.0 | 3.5 | 3.5 | 4.5 | 4.0 |
| impact absorbability | 4.0 | 3.2 | 3.4 | 4.4 | 4.0 |
| transient characteristics | 2.5 | 2.5 | 3.0 | 4.0 | 3.5 |

**Table 3: Evaluation Results**

| | example 7 | example 5 | example 4 | example 6 | example 8 |
|---|---|---|---|---|---|
| presence of turn-up portion of 1st ply | yes | yes | yes | yes | yes |
| turn-up edge position of 1st ply | A | A | A | A | A |
| presence of turn-up portion of 2nd ply | no | no | no | no | no |
| ratio: L1/LT | 0.1 | 0.1 | 0.1 | 0.1 | 0.1 |
| ratio: L2/LH | 0.62 | 0.62 | 0.62 | 0.62 | 0.62 |
| tip-end position of apex | X | X | X | X | X |
| ratio: AW/BW | 0.2 | 0.3 | 0.55 | 0.7 | 0.8 |
| rubber hardness of apex | 77 | 77 | 77 | 77 | 77 |
| turning stability | 3.6 | 4.0 | 4.6 | 4.0 | 3.7 |
| impact absorbability | 3.6 | 4.0 | 4.5 | 3.7 | 3.5 |
| transient characteristics | 3.5 | 3.7 | 4.0 | 3.7 | 3.5 |

**Table 4: Evaluation Results**

| | example 11 | example 9 | example 10 | example 12 |
|---|---|---|---|---|
| presence of turn-up portion of 1st ply | yes | yes | yes | yes |
| turn-up edge position of 1st ply | A | A | A | A |
| presence of turn-up portion of 2nd ply | no | no | no | no |
| ratio: L1/LT | 0.1 | 0.1 | 0.1 | 0.1 |
| ratio: L2/LH | 0.62 | 0.62 | 0.62 | 0.62 |
| tip-end position of apex | X | X | X | X |
| ratio: AW/BW | 0.5 | 0.5 | 0.5 | 0.5 |
| rubber hardness of apex | 65 | 70 | 80 | 90 |
| turning stability | 3.5 | 3.7 | 4.0 | 3.5 |
| impact absorbability | 4.0 | 4.2 | 4.0 | 3.5 |
| transient characteristics | 3.5 | 3.7 | 4.0 | 3.8 |

As indicated in Tables 1∼4, turning stability, impact absorbability and transient characteristics were found excellent in the tires of examples 1∼12. From those evaluation results, it is clear that tires having superior features are provided according to the present invention.

### INDUSTRIAL APPLICABILITY

A pneumatic tire related to the present invention can be mounted on various types of motorcycles.

To provide a motorcycle pneumatic tire that exhibits excellent riding comfort and turning stability.

In tire 2, turn-up edge 30 of carcass 10 is positioned on the axially inner side of second ply 24. Point (PA) is set at one quarter of the half width (LT), measured from tread edge (PT) of tread surface 16, distance (LH) is set as the distance from tread edge (PT) to heel (PH) of bead 8, point (PB) is set on outer surface 34 to correspond to the midpoint of distance (LH), point (P1) is set on outer surface 36 to correspond to turn-up edge 30, and point (P2) is set on outer surface 34 to correspond to inner edge 32. When set as above, point (P1) is located at tread edge (PT) or between tread edge (PT) and point (PA) in a radial direction, the ratio (L2/LH) is set at 0.60 or greater but no greater than 0.90, and tip (PE) of apex 20 is disposed between tread edge (PT) and point (PA) in a radial direction.

### DESCRIPTION OF NUMERICAL REFERENCES

- 2: tire
- 4: tread
- 6: sidewall
- 8: bead
- 10: carcass
- 12: band
- 14: inner liner
- 16: tread surface
- 18: core
- 20: apex
- 22: first ply
- 24: second ply
- 26: main portion
- 28: turn-up portion
- 30: turn-up edge
- 32: inner edge
- 34, 36: outer surface
- 38: outer edge

## Claims

1. A motorcycle pneumatic tire, comprising:
a tread (4);
a pair of beads (8, 8) each extending from an edge of the tread (4) in an approximately radially inward direction;
a pair of beads (8, 8) each further extending from the sidewall (6) in an approximately radially inward direction;
a carcass (10) spread along the inner side of the tread (4) and sidewalls (6, 6) to bridge both beads (8, 8); and
a band (12) laminated on the carcass (10) in a radially inward direction from the tread (4),
wherein the band (12) is made of cords and topping rubber,
the cords are helically wound in a tire circumferential direction,
the absolute value of the cord angles to the equatorial plane is 5 degrees or less,
the carcass (10) is made up of a first ply (22) and a second ply (24) which is laminated on the radially outer side of the first ply (22),
the first ply (22) is made of first carcass cords and topping rubber,
the absolute value of the inclination angle of the first carcass cords with respect to a circumferential direction is at least 60 degrees but no greater than 90 degrees,
the second ply (24) is made of second carcass cords and topping rubber,
the absolute value of the inclination angle of the second carcass cords with respect to a circumferential direction is at least 60 degrees but no greater than 90 degrees,
the first ply (22) turns up around the bead,
the first ply (22) has a turn-up portion (28) that extends in an approximately radially outward direction and a turn-up edge (30) positioned on the radially outer side of the turn-up portion (28),
the second ply (24) has an inner edge (32) positioned on the radially inner side of a tread edge (PT),
the turn-up edge (30) is positioned on the axially inner side of the second ply (24),
when point (PA) is set at one quarter of the half width (LT) of the tread (4) surface in an axial direction, measured from the tread edge (PT), distance (LH) is set as the distance from the tread edge (PT) to the bead heel, point (PB) is set on the outer surface of the tire to correspond to the midpoint of distance (LH), point (P1) is set on the outer surface of the tire to correspond to the turn-up edge (30), and point (P2) is set on the outer surface of the tire to correspond to the inner edge,
point (P1) is located at the tread edge (PT) or between the tread edge (PT) and point (PA) in a radial direction, and
distance (L2) from the tread edge (PT) to point (P2) and distance (LH) are set to have a ratio (L2/LH) of 0.60 or greater but no greater than 0.90,
**characterized in that**
the tip (PE) of the apex (20) is disposed between the tread edge (PT) and point (PA) in a radial direction.

2. The tire according to Claim 1, wherein thickness (AW) of the apex (20) and bead width (BW) at the point (PB) are set to have a ratio (AW/BW) of 0.3 or greater but no greater than 0.7.

3. The tire according to Claim 1 or 2, wherein the hardness of the crosslinked rubber of the apex (20) is set at least 70 but no greater than 85.

## Patentansprüche

1. Motorradluftreifen, der Folgendes aufweist:
eine Lauffläche (4);
ein Paar von Wülsten (8, 8), die sich jeweils von einem Rand der Lauffläche (4) in einer annährend radial einwärts gerichteten Richtung erstrecken;
ein Paar von Wülsten (8, 8), die sich jeweils von der Seitenwand (6) in einer annährend radial einwärts gerichteten Richtung weiter erstrecken;
eine Karkasse (10), die entlang der Innenseite der Lauffläche (4) und Seitenwänden (6, 6) ausgedehnt ist, um beide Wülste (8, 8) zu überbrücken; und
ein Band (12), das auf die Karkasse (10) in einer radial einwärts gerichteten Richtung von der Lauffläche (4) aus laminiert ist,
wobei das Band (12) aus Schnüren und einer Gummierung hergestellt ist,
die Schnüre in einer Reifenumfangsrichtung spiralförmig gewickelt sind,
der Absolutwert der Schnurwinkel zu der Äquatorebene 5 Grad oder weniger ist,
die Karkasse (10) aus einem ersten Gewebe (22) und einem zweiten Gewebe (24) hergestellt ist, das auf die radial äußere Seite des ersten Gewebes (22) laminiert ist,
das erste Gewebe (22) aus ersten Karkassenschnüren und einer Gummierung hergestellt ist,
der Absolutwert des Neigungswinkels der ersten Karkassenschnüre hinsichtlich einer Umfangsrichtung zumindest 60 Grad, aber nicht größer als 90 Grad ist,
das zweite Gewebe (24) aus zweiten Karkassenschnüren und einer Gummierung hergestellt ist,
der Absolutwert des Neigungswinkels der zweiten Karkassenschnüre hinsichtlich einer Umfangsrichtung zumindest 60 Grad, aber nicht größer als 90 Grad ist,
das erste Gewebe (22) um die Wulst herum hochgeschlagen ist,
das erste Gewebe (22) einen Hochschlagabschnitt (28) hat, der sich in einer annähernd radial auswärts gerichteten Richtung erstreckt, und einen Hochschlagrand (30) hat, der auf der radial äußeren Seite des Hochschlagabschnitts (28) positioniert ist,
das zweite Gewebe (24) einen inneren Rand (32) hat, der auf der radial inneren Seite eines Laufflächenrands (PT) positioniert ist,
der Hochschlagrand (30) auf der axial inneren Seite des zweiten Gewebes (24) positioniert ist,
wenn ein Punkt (PA) bei einem Viertel der halben Breite (LT) der Laufflächenoberfläche in einer axialen Richtung eingestellt ist, das von dem Laufflächenrand (PT) gemessen ist, eingestellt ist, ist ein Abstand (LH) als der Abstand von dem Laufflächenrand (PT) zu der Wulstferse eingestellt, ist ein Punkt (PB) auf der Außenfläche des Reifens eingestellt, um dem Mittelpunkt eines Abstands (LH) zu entsprechen, ist ein Punkt (P1) auf der Außenfläche des Reifens eingestellt, um dem Hochschlagrand (30) zu entsprechen, und ist ein Punkt (P2) auf der Außenfläche des Reifens eingestellt, um dem inneren Rand zu entsprechen,
wobei sich der Punkt (P1) an dem Laufflächenrand (PT) oder zwischen dem Laufflächenrand (PT) und dem Punkt (PA) in einer radialen Richtung befindet, und
ein Abstand (L2) von dem Laufflächenrand (PT) zum Punkt (P2) und der Abstand (LH) eingestellt sind, um ein Verhältnis (L2/LH) von 0,60 oder größer, aber nicht größer als 0,90 zu haben,
**dadurch gekennzeichnet, dass**
die Spitze (PE) des Apex (20) zwischen dem Laufflächenrand (PT) und dem Punkt (PA) in einer radialen Richtung angeordnet ist.

2. Reifen nach Anspruch 1, wobei eine Dicke (AW) des Apex (20) und eine Wulstbreite (BW) an dem Punkt (PB) eingestellt sind, um ein Verhältnis (AW/BW) von 0,3 oder größer, aber nicht größer als 0,7 zu haben.

3. Reifen nach Anspruch 1 oder 2, wobei die Härte des vernetzten Gummis des Apex (20) auf zumindest 70, aber nicht größer als 85 eingestellt ist.

## Revendications

1. Pneu de motocyclette comprenant :
une bande de roulement (4) ;
une paire de talons (8, 8) s'étendant chacun à partir d'un bord de la bande de roulement (4) dans une direction approximativement radiale vers l'intérieur ;
une paire de talons (8, 8) s'étendant chacun en outre à partir du flanc (6) dans une direction approximativement radiale vers l'intérieur ;
une carcasse (10) qui s'étale le long du côté interne de la bande de roulement (4) et des flancs (6, 6) pour relier les deux talons (8, 8) ; et
une bande (12) déposée en couche sur la carcasse (10) dans une direction radialement vers l'intérieur à partir de la bande de roulement (4),
dans lequel la bande (12) est composée de cordes et de caoutchouc de gommage,
les cordes sont enroulées de manière hélicoïdale dans une direction circonférentielle de pneu,
la valeur absolue des angles de corde sur le plan équatorial est de 5 degrés ou moins,
la carcasse (10) est composée d'une première nappe (22) et d'une seconde nappe (24) qui est déposée en couche sur le côté radialement externe de la première nappe (22),
la première nappe (22) est composée des premières cordes de carcasse et du caoutchouc de gommage,
la valeur absolue de l'angle d'inclinaison des premières cordes de carcasse par rapport à une direction circonférentielle est d'au moins 60 degrés mais non supérieure à 90 degrés,
la seconde nappe (24) est composée de secondes cordes de carcasse et de caoutchouc de gommage,
la valeur absolue de l'angle d'inclinaison des secondes cordes de carcasse par rapport à une direction circonférentielle est d'au moins 60 degrés, mais non supérieure à 90 degrés,
la première nappe (22) tourne autour du talon,
la première nappe (22) a une partie de retournement (28) qui s'étend dans une direction approximativement radiale vers l'extérieur et un bord de retournement (30) positionné sur le côté radialement externe de la partie de retournement (28),
la seconde nappe (24) a un bord interne (32) positionné du côté radialement interne d'un bord de bande de roulement (PT),
le bord de retournement (30) est positionné sur le côté axialement interne de la seconde nappe (24),
lorsque le point (PA) est placé à un quart de la moitié de la largeur (LT) de la surface de bande de roulement (4) dans une direction axiale, mesuré à partir du bord de bande de roulement (PT), la distance (LH) est déterminée comme étant une distance allant du bord de bande de roulement (PT) jusqu'au talon, le point (PB) est placé sur la surface externe du pneu pour correspondre au point central de la distance (LH), le point (P1) est placé sur la surface externe du pneu pour correspondre au bord de retournement (30), et le point (P2) est placé sur la surface externe du pneu pour correspondre au bord interne,
le point (P1) est positionné au niveau du bord de bande de roulement (PT) ou bien entre le bord de bande de roulement (PT) et le point (PA) dans une direction radiale, et
la distance (L2) allant du bord de bande de roulement (PT) jusqu'au point (P2) et la distance (LH) sont déterminées pour avoir un rapport (L2/LH) de 0,60 ou plus, mais non supérieur à 0,90,
**caractérisé en ce que** :
la pointe (PE) du sommet (20) est disposée entre le bord de bande de roulement (PT) et le point (PA) dans une direction radiale.

2. Pneu selon la revendication 1, dans lequel l'épaisseur (AW) du sommet (20) et la largeur de talon (BW) au point (PB) sont déterminées pour avoir un rapport (AW/BW) de 0,3 ou plus, mais non supérieur à 0,7.

3. Pneu selon la revendication 1 ou 2, dans lequel la dureté du caoutchouc réticulé du sommet (20) est d'au moins 70, mais non supérieure à 85.
